# EUROPEAN PATENT APPLICATION

(11) **EP 0 694 332 A2**
(43) Date of publication of application: **31.01.1996**
(21) Application number: 95305001.0
(22) Date of filing: 18.07.1995
(51) Int. Cl.: B01J 23/40, B01D 53/94, B01J 23/56

(54) **Catalyst**

(30) Priority: 29.07.1994 GB 9415334
(71) Applicant: JOHNSON MATTHEY PUBLIC LIMITED COMPANY, London EC1N 8JP (GB)
(72) Inventor: Smedler, Jan Olof Gudmund, S-440 64 Ronang (SE); Loof, Ulf Peter, S-423 73 Save (SE); Marsh, Per Lennart, S-442 32 Kingalv (SE)
(74) Representative: Brewer, Leonard Stuart

(57) **Abstract**

A catalyst comprising platinum group metal supported on a ceramic support comprising a mixture of titania, silica, alumina and zirconia is useful especially for the treatment of the exhaust gas of diesel engines in order to reduce air pollution.

## Description

This invention relates to a catalyst, its production and its use.

Platinum group metals are well known for their catalytic activity, for example for oxidising hydrocarbons or carbon monoxide, for instance for treating the exhaust gas of an internal combustion engine in order to reduce air pollution. Because platinum group metals are rare, they are normally employed spread out as a thin layer on a finely divided ceramic support. The support in turn is often carried in the channels of a honeycombed inert carrier through which channels gas to be treated flows. Such is the position with catalytic converters for petrol vehicles. More recently, such catalytic converters have been used for diesel vehicles. In the case of exhaust gas from a diesel engine, particulates are an additional possible pollutant; the particulates are soot which can carry other pollutants such as sulphates and high-boiling hydrocarbons. Particulates can be filtered out of diesel exhaust gas, but to save regeneration of the filter there is interest in a honeycomb catalyst through whose channels diesel exhaust gas can flow freely, *ie* without filtration as in wall flow filters which are honeycombs in which alternate channels are plugged. These free flow honeycomb catalysts for diesel exhaust can contain as catalytic substance for example a combination of platinum and vanadium.

US specification 5157007 discloses a catalyst capable of operating in a continuous manner without soot particulate separation and without cyclical regeneration for the oxidative purification of the exhaust gases of diesel engines and having a high conversion performance for hydrocarbons and carbon monoxide at low temperatures and inhibited oxidation action in respect of NO and SO₂ comprising an open-cell monolithic or honeycombed inert carrier of ceramic or metal, said inert carrier having a plurality of channels essentially parallel to the direction of flow of said exhaust gases, such that exhaust gas flows freely through the channels of the carrier, said channels having interior surfaces coated with an activity-enhancing support material selected from the group consisting of finely divided aluminium oxide, titanium oxide, silicon oxide, zeolite and mixtures thereof, said activity-enhancing support material having deposited thereon a catalytically active component of at least one platinum group metal selected from the group consisting of platinum, palladium, rhodium and iridium, the platinum group metal or metals being doped with vanadium or being in contact with an oxidic vanadium compound, said catalyst being prepared by impregnating said activity-enhancing support material with a solution of compounds of said platinum group metals and a solution of a vanadium compound, said impregnating taking place simultaneously or successively in any desired sequence, thereafter drying, optionally calcining at a temperature of at least 200°C.

United Kingdom specification 2263650 discloses a monolithic catalyst for the conversion of sulphur dioxide to sulphur trioxide comprising a foraminous monolithic ceramic support, said support having at the foraminal wall surfaces thereof a high surface area substrate for an active catalyst phase, and a combination of a platinum active phase and a promoter on said substrate, said promoter being selected from the group consisting of a compound of zirconium, a compound of titanium or a compound of hafnium.

United Kingdom specification 2070959 discloses a catalyst for purifying an exhaust gas, which catalyst comprises a carrier comprising calcium aluminate and 5-90% of titanium oxide based on the weight of the carrier, and a catalytic component of a platinum group metal or compound thereof or of a metal oxide capable of oxidising reductive gases into harmless gases and supported on said carrier in an amount of 0.001-0.1wt% based on the weight of the carrier when said platinum group metal or compound thereof is used and in an amount of 0.1-10wt% based on the weight of the carrier when said metal oxide is used.

A new ceramic support for platinum group metal catalysts has now been discovered.

Accordingly, the invention provides a catalyst comprising platinum group metal supported on a ceramic support comprising a mixture of titania, silica, alumina and zirconia.

The invention provides also a process for preparing the catalyst, which process comprises impregnating the support with a solution of a compound of the platinum group metal and calcining the impregnated support to convert the compound to the platinum group metal.

The invention also provides a method of catalysing a chemical reaction, which method comprises contacting the reactants over the catalyst.

The present catalyst has a surprisingly advantageous combination of properties, which is evident particularly when used for the treatment of the exhaust gas of diesel engines in order to reduce air pollution. Diesel engines produce exhaust gas at a relatively low temperature, and low-temperature activity to oxidise hydrocarbon in the gas to carbon dioxide and water is desired, therefore, as is low-temperature activity to oxidise the carbon monoxide to carbon dioxide. By oxidising high-boiling hydrocarbons in this way, the weight of the particulates in the gas is reduced. This reduction facilitates particulates in the case of a free flow catalyst not blocking the catalyst. On the other hand, it is desirable that sulphur dioxide in the gas be not oxidised to sulphur trioxide (which can be emitted as a sulphuric acid fog). Desirably NOₓ (NO plus NO₂) in the gas is reduced. Desirably, sulphate is not stored by the catalyst. The present support produces a markedly enhanced combination of such desirable properties of platinum group metals catalysts. For instance, the present support containing zirconia has been shown - see the Examples herewith - to produce enhanced CO oxidation (shown by a lower temperature at which 50% conversion occurs), enhanced NOₓ reduction and reduced SO₂ oxidation compared to the same support without zirconia. The silica enables the catalyst to be prepared readily by a coating process. The titania permits the catalyst to store less sulphate. The alumina makes the catalyst more resistant to high temperatures.

The weight of the alumina in the present support is usually 5-90%, preferably 10-30%, of the total weight of the titania, silica, alumina and zirconia.

The weight of the silica in the present support is usually 4-89%, preferably 10-50%, of the total weight of the titania, silica, alumina and zirconia.

The weight of the titania in the present support is usually 4-89%, preferably 40-80%, of the total weight of the titania, silica, alumina and zirconia.

The weight of the zirconia in the present support is usually 2-50%, preferably 6-20%, of the total weight of the titania, silica, alumina and zirconia.

The usual forms of the titania, silica, alumina and zirconia can be employed. Thus, for instance, the alumina is usually γ alumina, for example of specific surface area 100-150, *eg* 140, m/g. The silica and titania can be of specific surface area 60-100, *eg* 80, m/g. The zirconia can be of specific surface area 20-100, *eg* 70, m/g. Preferably,the titania is stabilised by tungsten oxide by being in the form of a mixed oxide of titanium and tungsten. This is a solid solution of titanium and tungsten oxides rather than a mere physical mixture of titanium oxide and tungsten oxide. It has been found that titania stabilised in this way gives a significant improvement to the high temperature durability of the catalyst. The tungsten oxide, measured as WO₃, preferably constitutes 5-15%, especially 10%, of the weight of the titania.

It is especially preferred that the zirconia be in the form of a fine dispersion among the titania, silica and alumina. Such a fine dispersion is obtainable by impregnating a solid mixture of the titania, silica and alumina with a solution of a zirconium compound and calcining the impregnated mixture to convert the zirconium compound to zirconia; the zirconia is then obtained in the form of a finely dispersed layer.

The platinum group metal is usually selected from the group consisting of platinum, palladium, rhodium, ruthenium and iridium. Preferably, the platinum group metal comprises (*ie* consists of or includes) platinum.

The catalyst can contain additional materials. For instance, zeolite can be included in the support, or the catalyst can contain additives selected from V, Ce, Zr, Fe, P, In, Bi, Mn, Cd, Sb, Pb, Zn, Ga, Ge, Te, Ta, Ni, Co, Cu, Sc, Y, La, Nb, Cr, Mo and W. For example, P, In or W can be present as a stabiliser for the support; P, In or V as an SO₂ oxidation inhibitor; or Zr, Ce, Mn, Fe, Zn, Ga, Ge, Ni, Cu, Co, Te, Ta, Sb, Cd, Y, La or Nb as a base metal promoter. Known additives can be employed. It will be appreciated that some of the present additional elements, or indeed the platinum group metal, may be present in the form of oxides, especially after use of the catalyst has begun. Particularly notable is the presence of P, In or W. P, which can be introduced by impregnation with phosphoric acid, affords a significant improvement in the high temperature durability of the catalyst.

In a preferred embodiment, the catalyst contains in addition a base metal component selected from the group consisting of vanadium, molybdenum, lanthanum, chromium, tungsten, indium and oxides thereof, especially vanadium and/or vanadium oxide.

The support can be carried on a carrier, which can be a conventional carrier. The carrier can be metal or ceramic. Preferably, the support is carried in the channels of a honeycombed inert carrier (sometimes called a monolith), *eg* of cordierite, through which channels gas can flow freely. Such a catalyst contains preferably 70-5000g of the platinum group metal per m³. It contains preferably 300-1500g of zirconia per m³. It contains preferably 1200-5500g of base metal additive, particularly vanadium, per m³. It contains preferably 3500-15000g of phosphorus per m³. The honeycomb preferably contains 15-100 channels per square cm of cross-section.

The present catalyst can be prepared in a conventional way. Usually, the catalyst is prepared by impregnating the support with a solution of a compound of the platinum group metal and calcining the impregnated support to convert the compound to the platinum group metal. The compound can be for instance Pt(NH₃)₄(HCO₃)₂, Pt(NH₃)₄Cl₂, H₂PtCl₆, Pt(NH₃)₄(OH)₂, PdCl₂, Pd(NH₃)₄(OH)₂ or H₃RhCl₆. Whereas US specification 5157007, which is mentioned above, teaches that in the production of its catalyst it is preferred to calcine in a current of gas containing hydrogen, in the present invention it is preferred that any calcination be not in such a gas. The present invention provides in this way a simpler route and one which does not involve any hazards from the use of hydrogen.

The support can be formed in a conventional way. For instance, pre-formed TiO₂, SiO₂, Al₂O₃ and ZrO₂ can be admixed, for example in a liquid which is then applied to a honeycombed carrier which is then calcined.

Preferably, however, the zirconia is in a fine dispersion among the titania, silica and alumina, and this can be obtained by introducing the zirconia by means of a solution of a zirconium compound which is then calcined to convert the zirconium compound to zirconia. Thus, in a preferred embodiment the support is formed by forming a solid mixture of the titania, silica and alumina, preferably on a honeycombed carrier, impregnating the mixture with a solution of a zirconium compound and calcining the impregnated mixture to convert the zirconium compound to zirconia. The solid mixture of the titania, silica and alumina on the carrier can be formed by coating the carrier with a mixture of the titania, silica and alumina and calcining. The mixture to be coated on the carrier can be prepared by mixing the titania and silica and then admixing milled alumina. In another preferred embodiment, the support is formed by forming a solution of a zirconium compound which carries the titania, silica and alumina in suspension, and calcining the solution/suspension, preferably on a honeycombed carrier, to convert the zirconium compound to zirconia.

Additives can be incorporated into the catalyst in conventional way. This can be done before, simultaneously with, or after, the incorporation of the platinum group metal. Incorporation is preferably by impregnation with a solution or suspension of an additive precursor and then calcination to convert the precursor to the additive. In a preferred embodiment, before, simultaneously with, or preferably after, the incorporation of the platinum group metal, the catalyst is impregnated with a solution of a compound of a base metal selected from the group consisting of vanadium, molybdenum, lanthanum, chromium, tungsten and indium and calcined to convert the compound to the base metal or oxide thereof. In another preferred embodiment, before, simultaneously with, or after, the incorporation of the platinum group metal, the catalyst is impregnated with a solution of a phosphorus compound and calcined to convert the compound to phosphorus or phosphorus pentoxide.

In the present production, any calcination is usually above 200°C, *eg* at 300-600°C. Before any calcination, there is usually a separate drying stage. Any solution, suspension or liquid mentioned above is conveniently aqueous. The precursors employed can be conventional. Zirconia and the base metal additives are preferably introduced by employing their water-soluble salts, typically nitrates or acetates. In the case of vanadium, the precursor can be organic or inorganic, *eg* vanadyl oxalate or ammonium metavanadate. In the case of phosphorus, the precursor is preferably phosphoric acid.

The present catalyst can be used to catalyse a chemical reaction by contacting the reactants over the catalyst. This can be done in conventional way. The catalyst is used preferably to treat the exhaust gas of an internal combustion engine in order to reduce air pollution. Accordingly, the catalyst is preferably employed in the exhaust apparatus of an internal combustion engine, and is especially in the form of a honeycomb discussed above through whose channels the exhaust gas flows freely. Advantageously the engine is a diesel engine, preferably in a vehicle, *eg* a car or lorry.

The present method of catalysing a chemical reaction is useful even at high space velocities of gas, particularly exhaust gas of an internal combustion engine, contacting the catalyst. The space velocity can be for instance at least 30,000 per hour, for instance in the range 30,000-300,000 per hour.

The invention is illustrated by the following Examples.

### EXAMPLE 1

TiO₂ stabilised with 10% of its weight of tungsten oxide was mixed with an aqueous slurry of SiO₂, and milled Al₂O₃ was added. The resultant slurry contained a mixture of TiO₂, SiO₂ and Al₂O₃ in a respective weight ratio of 70:20:10. The slurry, containing 380g of the mixture per litre, was coated into the channels of a conventional honeycombed inert carrier through which gas can flow freely. The carrier was a conventional cordierite cylindrical monolith 4in (10.2cm) in diameter and 6in (15.2cm) long, and contained 400 channels per square inch (62 per square cm). The monolith was then dried and fired at 500°C. It contained 140g of the mixture per litre of monolith.

The monolith bore a solid mixture of the titania, silica and alumina. This was impregnated with an aqueous solution of zirconium nitrate containing the equivalent of 20% zirconia. The monolith was then calcined at 500°C to convert the zirconium compound to zirconia and thereby form a TiO₂-SiO₂-Al₂O₃-ZrO₂ support in which the zirconia is in the form of a fine dispersion among the titania, silica and alumina. The monolith contained 21g of the zirconia per litre of monolith.

The monolith bearing the support was then impregnated with an aqueous solution of tetraammine platinum chloride, and calcined at 400°C to convert the platinum compound to platinum.

The monolith was then impregnated with an aqueous solution of vanadyl oxalate, and calcined at 500°C to decompose the vanadium compound.

The resulting catalyst was mounted in the exhaust apparatus of a 12 litre turbo charged Volvo diesel engine. The fuel employed contained 500ppm of sulphur. NOₓ reduction was measured as follows: An engine speed of 1100 revolutions per minute and a space velocity of about 30,000 per hour were employed. Diesel fuel was injected before the catalyst. The catalyst was tested on ramp up with a hydrocarbon/NOₓ ratio of 2. Fuel injection started at 160°C. The temperature was increased by steps of 10°C from 140 to 220°C and then by 20°C steps up to 320°C. Each step took about 20 minutes.

Hydrocarbon, CO, SO₂ and particulate conversions were measured as follows: An engine speed of 1100 revolutions per minute and a space velocity of about 60,000 per hour were employed. The exhaust temperature was increased by steps of 40°C from 140 to 550°C. Each step took about 20 minutes. The catalyst was evaluated on ramp up and ramp down.

The results of the tests, and the amounts of the ingredients on the monolith, are shown in the Table.

The Table shows the temperature, T₅₀, at which 50% of the hydrocarbon is oxidised to carbon dioxide and water - the lower the temperature this occurs the better; the temperature, T₅₀, at which 50% of the CO is oxidised to carbon dioxide - again the lower the temperature this occurs the better; the percentage of the SO₂ oxidised to SO₃ - the smaller the figure the better; the percentage of NOₓ (NO + NO₂) which is reduced - the higher the figure the better; and the particulate % conversion compared to a standard - the higher the figure the better and it is possible for negative figures to be obtained, which means there is a higher weight of particulates than in the case of the standard.

### EXAMPLES 2-6

Example 1 was followed but using more platinum (Examples 2-6), more of the mixture of stabilised TiO₂, SiO₂ and Al₂O₃ (200g per litre of monolith, Examples 3 and 5), more zirconia (30g per litre of monolith, Examples 3, 5 and 6), phosphorus (impregnated as phosphoric acid, Examples 5 and 6), and no vanadium (Examples 4-6). The details and the results of the tests are also shown in the Table.

### COMPARATIVE EXAMPLE

Example 1 was followed except that no zirconia was introduced. The details and the results of the test are shown in the Table. It can be seen that the catalyst of Example 1 has significantly better activity against CO (since it achieves 50% conversion of the CO at a lower temperature) and NOₓ and has markedly better SO₂ oxidation inhibition (since the comparative catalyst converts eight times as much SO₂ to SO₃).

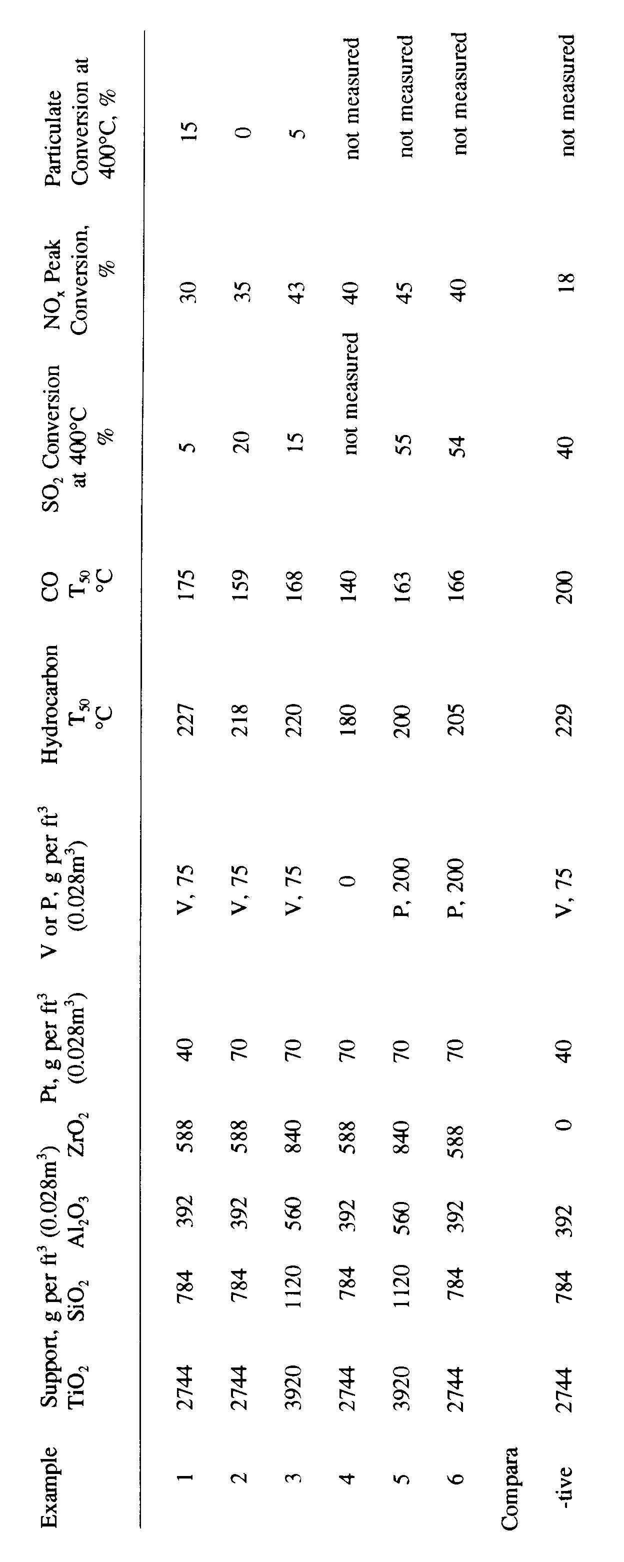

## Claims

1. A catalyst comprising platinum group metal supported on a ceramic support comprising a mixture of titania, silica, alumina and zirconia.

2. A catalyst according to claim 1 whose support contains 5-90% of the alumina, based on the total weight of the titania, silica, alumina and zirconia.

3. A catalyst according to claim 1 or 2 whose support contains 4-89% of the silica, based on the total weight of the titania, silica, alumina and zirconia.

4. A catalyst according to any one of the preceding claims whose support contains 4-89% of the titania, based on the total weight of the titania, silica, alumina and zirconia.

5. A catalyst according to any one of the preceding claims whose support contains 2-50% of the zirconia, based on the total weight of the titania, silica, alumina and zirconia.

6. A catalyst according to any one of the preceding claims wherein the titania is stabilised by tungsten oxide by being in the form of a mixed oxide of titanium and tungsten.

7. A catalyst according to claim 6 wherein the tungsten oxide, measured as WO₃, constitutes 5-15% of the weight of the titania.

8. A catalyst according to any one of the preceding claims wherein the zirconia is in the form of a fine dispersion among the titania, silica and alumina.

9. A catalyst according to any one of the preceding claims which contains in addition a base metal component selected from the group consisting of vanadium, molybdenum, lanthanum, chromium, tungsten, indium and oxides thereof.

10. A catalyst according to claim 9 wherein the base metal component is selected from vanadium and vanadium oxide.

11. A catalyst according to any one of the preceding claims wherein the platinum group metal is selected from the group consisting of platinum, palladium, rhodium, ruthenium and iridium.

12. A catalyst according to any one of the preceding claims wherein the support is carried in the channels of a honeycombed inert carrier through which channels gas can flow freely.

13. A process for preparing a catalyst claimed in any one of the preceding claims, which process comprises impregnating the support with a solution of a compound of the platinum group metal and calcining the impregnated support to convert the compound to the platinum group metal.

14. A process according to claim 13 wherein the support is formed by forming a solid mixture of the titania, silica and alumina, impregnating the mixture with a solution of a zirconium compound and calcining the impregnated mixture to convert the zirconium compound to zirconia.

15. A process according to claim 13 wherein the support is formed by forming a solution of a zirconium compound which carries the titania, silica and alumina in suspension, and calcining the solution/suspension to convert the zirconium compound to zirconia.

16. A process according to any one of claims 13-15 wherein the catalyst is subsequently impregnated with a solution of a compound of a base metal selected from the group consisting of vanadium, molybdenum, lanthanum, chromium, tungsten and indium and calcined to convert the compound to the base metal or oxide thereof.

17. A method of catalysing a chemical reaction, which method comprises contacting the reactants over a catalyst claimed in any one of claims 1-12.

18. A method according to claim 17 which is the treatment of the exhaust gas of a diesel engine in order to reduce air pollution.
